# EUROPÄISCHE PATENTSCHRIFT

(11) **EP 1 506 914 B1**
(45) Veröffentlichungstag und Bekanntmachung des Hinweises auf die Patenterteilung: **08.09.2010**
(21) Anmeldenummer: 04018186.9
(22) Anmeldetag: 31.07.2004
(51) Int. Cl.: B62D 21/02, B62D 21/12, B62D 63/06, B62D 27/06

(54) **Anbauchassis für motorisierte Zugköpfe**
Attachable extension chassis for tractors
Châssis reporté pour tête de traction d'un véhicle

(30) Priorität: 11.08.2003 DE 20312500 U
(43) Veröffentlichungstag der Anmeldung: 16.02.2005
(73) Patentinhaber: AL-KO Kober AG, D-89359 Kötz (DE)
(72) Erfinder: Kania, Bernhard, 89264 Weissenhorn (DE); Lehner, Helmut, 89359 Kötz (DE)
(74) Vertreter: Ernicke, Klaus Stefan

(56) Entgegenhaltungen:
- DE-A1- 10 040 018
- DE-A1- 19 522 341
- DE-C1- 10 210 147
- GB-A- 2 137 938

## Beschreibung

Die Erfindung betrifft ein Anbauchassis für motorisierte Zugköpfe mit den Merkmalen im Oberbegriff des Hauptanspruchs.

Ein Anbauchassis für motorisierte Zugköpfe ist aus der WO 00/37301 bekannt. Es wird mit dem Fahrgestell des motorisierten Zugkopfes über zwei Adapter in Form sogenannter Chassisanschlüsse verbunden. Hierbei sind die Chassisanschlüsse am Fahrgestell des Zugkopfes durch eine Schweißverbindung starr befestigt. Zu den Längsträgern des Anbauchassis besteht eine Napfverschraubung.

Die nachveröffentlichte DE 102 10 147 C1 zeigt eine modulare Tragstruktur eines Nutzfahrzeugs, insbesondere eines Lastkraftwagens, mit einem Achsträgerelement zur Lagerung von ein oder mehreren Vorderachsen des Fahrzeugs. Das Achsträgerelement weist Achsträgerseitenteile auf, die über ein Flanschteil mit Profillängsträgern des hinteren Fahrgestells verbunden werden. Das komplette Fahrzeugchassis wird von einem Hersteller produziert, wobei es durch die modulare Tragstruktur an unterschiedliche Einsatzbedingungen angepasst werden kann.

Die DE 100 40 018 A1 befasst sich mit der Befestigung einer Pritsche oder eines Hilfsrahmens auf einem Fahrzeugunterbau. Der LKW besitzt ein konventionelles Fahrwerk mit Vorder- und Hinterachse und einem Hinterradantrieb.

Die gattungsgemäße GB 2 137 938 A offenbart eine nachträgliche Verlängerung von LKW-Fahrgestellen. Hierzu wird das zunächst in konventioneller weise hergestellte komplette Fahrgestell an einer Stelle zwischen Vorder- und Hinterachse durchgetrennt, wobei an dieser Trennstelle ein Verlängerungsstück eingesetzt wird, welches formschlüssig in oder auf die Längsträger der getrennten Fahrgestellhälften gesteckt und mit Bolzen befestigt wird. Diese Bolzenverbindung ist von temporärer Art und dient zur vorläufigen Fixierung und Verbindung der Fahrgestellhälften auf dem Transport zu einer Weiterverarbeitungsstation, in der die Fahrgestellteile nach Entfernen der Bolzen dauerhaft verschweißt werden. Das vorerwähnte Zwischenstück wird fluchtend in die Fahrgestellteile eingebaut. Es besitzt keine Hinterachsanordnung und ist kein Anbauchassis.

Die DE 195 22 341 A1 betrifft einen Fahrzeugrahmen für ein Transportfahrzeug, welcher als konventioneller LKW-Rahmen ausgebildet ist und einen Leiterrahmen mit zusätzlichen Versteifungselementen aufweist, die mit einem zentralen Träger verbunden sind.

Es ist Aufgabe der vorliegenden Erfindung, ein verbessertes Anbauchassis aufzuzeigen.

Die Erfindung löst diese Aufgabe mit den Merkmalen im Hauptanspruch.
Die Ausbildung des Adapters als reiner Schraubadapter hat den Vorteil, dass jegliche Schweißverbindungen vermieden werden können. Der Korrosionsschutz am Fahrgestell des Zugkopfes wird durch eine Schraubverbindung nicht angetastet und behält seine volle Wirkung. Außerdem gehen von reinen Schraubverbindungen keine Gefahren für Anbauteile des Zugkopfes, z.B. ein Kunststofftank oder dgl. aus. Bei den vorbekannten Chassisanschlüssen konnten durch die Schweißarbeiten Schweißspritzer auf den Tank gelangen und diesen beschädigen. Diese mit der Erfindung gelöste Problematik kann auch andere Fahrzeugkomponenten, z.B. Auspuffanlagen, etc. betreffen.

Der Schraubadapter hat den Vorteil einer einfachen, leichten und sicheren Montage und bietet die gleiche mechanische Stabilität wie eine Schweißverbindung. Über eine entsprechende Gestaltung des Schraubadapters mit oberen und seitlichen Vorsprüngen und insbesondere mit dem Konsolenteil sind beliebige Versätze zwischen Fahrgestell und Anbauchassis möglich. Dies betrifft neben Unterzügen auch seitliche Versätze mit der Folge, dass am Anbauchassis gerade Längsträger häufiger Verwendung finden können. Die bisher üblichen Abkröpfungen kann in vielen Fällen verzichtet werden.

Um die statischen und dynamischen Kräfte an den Verbindungsstellen zwischen dem Schraubadapter und dem Fahrgestell des Zugkopfes optimal einleiten und aufnehmen zu können, empfiehlt sich eine Unterteilung des Schraubadapters in ein äußeres und inneres Anschlussteil, die untereinander ebenfalls durch Schrauben verbunden sind. Das innere Anschlussteil kann als Gegenhalter ausgebildet und im Innenraum des Längsträgers angeordnet sein, so dass sich eine beidseitig flächige Anlage der Anschlussteile an den Seitenwänden des Längsträgers und eine entsprechende optimale Abstützung und Einspannung zur Kräfteübertragung ergibt. Durch diese Gestaltung ist es ferner möglich, auf unterschiedliche Querschnittsformen von Längsträgern Rücksicht zu nehmen, die zwischen den verschiedenen Fahrzeugtypen bzw. -herstellern erheblich variieren können.

Die Verbindungsstelle zwischen dem Konsolenteil und dem Längsträger des Anbauchassis ist vorzugsweise als Napfverschraubung mit hoher Festigkeit ausgeführt. Die Konsolenform kann zudem an die Längsträgergestalt derart angepasst werden, dass sich eine formschlüssige Führung und Abstützung der Teile ergibt.

Das äußere Anschlussteil des Schraubadapters ist vorzugsweise mehrteilig ausgebildet, wobei das Konsolenteil von einem Trägerteil ergänzt wird, die miteinander verschraubt sind und die beide gemeinsam mit dem Längsträgers des Zugkopffahrgestells verbunden werden können. Dies sichert eine symmetrische und gleichmäßige Krafteinleitung und -übertragung auf das Fahrgestell. Unerwünschte Torsionen oder dgl. werden vermieden.

Die Längsträger des Zugkopffahrgestells können am freien Ende symmetrisch und auf eine gleiche Länge abgeschnitten sein. Alternativ ist eine asymmetrische Ablängung möglich. Hierdurch können die für den Transport gegeneinander gestellten und mit ihren Längsträgern untereinander verbundenen Zugköpfe eine kürzere Gesamtlänge im Verbund erhalten. Dies spart Platz und Transportkosten. Außerdem braucht der Tank nicht mehr abgebaut zu werden. Eine solche Fahrgestellgestaltung lässt sich auch mit konventionellen Anbauchassis und Adaptern verwirklichen.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Draufsicht auf die Fahrgestelle eines Zugkopfes und eines Anbauchassis mit Schraubadaptern an der Verbindungsstelle,
- Figur 2:: eine Heckansicht des Zugkopffahrgestells gem. Pfeil II von Figur 1,
- Figur 3:: eine Seitenansicht des Zugkopffahrgestells mit Schraubadapter,
- Figur 4:: eine Draufsicht auf die Anordnung von Figur 3,
- Figur 5:: eine abgebrochene perspektivische Ansicht einer Verbindungsstelle und eines Schraubadapters in Montagestellung,
- Figur 6:: eine Darstellung der Verbindungsstelle von Figur 5 ohne Längsträger des Anbauchassis,
- Figur 7:: eine Anordnung gem. Figur 6 ohne Konsolenteil des Schraubadapters,
- Figur 8:: eine Anordnung gem. Figur 7 ohne Träger- und Konsolenteil mit transparenter Darstellung des Fahrgestelllängsträgers,
- Figur 9 und 10:: perspektivische Ansichten von zwei Stützblechen mit angebauten Muttern für ein inneres Anschlussteil,
- Figur 11 bis13:: ein Trägerteil in verschiedenen geklappten Ansichten,
- Figur 14 bis 16:: ein Konsolenteil in verschiedenen geklappten Ansichten,
- Figur 17 bis 20:: einen anderen Zugkopf mit einer anderen Fahrgestellform und einem hieran angepassten Schraubadapter in verschiedenen Ansichten,
- Figur 21 und 22:: ein Konsolenteil für den Schraubadapter von Figur 18 bis 20,
- Figur 23, 24:: ein Trägerblech für das Konsolenteil von Figur 21, 22 und
- Figur 25:: eine Draufsicht auf eine Transportanordnung von zwei gegeneinander gestellten Zugköpfen.

Die Erfindung betrifft ein Anbauchassis(8) für einen motorisierten Zugkopf (1) oder Triebkopf und einen Schraubadapter (13) für deren Verbindung. Die Erfindung betrifft ferner den hieran angepassten Zugkopf sowie das komplette Fahrzeug und auch eine Transportanordnung zweier Zugköpfe (1, 1').

Der Zugkopf (1) besteht aus einem Fahrgestell (4) mit einer Achse, einem Antriebsmotor nebst Getriebe (nicht dargestellt), einer Kabine (2), einem Treibstofftank (3), einer Auspfuffanlage und weiteren Fahrzeugkomponenten. Das Fahrgestell (4) besitzt üblicherweise zwei parallele Längsträger (5), die knapp hinter der Kabine (2) abgeschnitten sind. An dieser Trennstelle wird das von z.B. einem anderen Hersteller stammende Anbauchassis (8) an dessen Vorderseite über zwei Schraubadapter (13) angeschlossen.

Das Anbauchassis (8) kann eine beliebige Ausgestaltung haben und besitzt zwei Längsträger (9) sowie ein oder mehrere Quertraversen (10). Zum Anbauchassis (8) gehört ferner eine vorzugsweise niedrig bauende Hinterachsanordnung (nicht dargestellt) und ggf. eine verstellbare Heckverlängerung sowie ein beliebiger Aufbau. Derartige Anbauchassis (8) werden insbesondere für Sonderaufbauten, wie Verkaufsfahrzeuge, Wohnmobile oder dgl. eingesetzt. Die Hinterachse hat eine besondere und von der Standardachse abweichende Federung und in vielen Fällen auch eine breitere Spur. Dementsprechend ist häufig der seitliche Abstand zwischen den Längsträgern (9) größer als beim Fahrgestell (4) des Zugkopfes (1). Außerdem sind Anbauchassis (8) häufig gegenüber dem Standardchassis tiefer gelegt, so dass eine Höhendifferenz zu den Längsträgern (5) des Zugkopfes (1) besteht.

Die Höhen- und Seitenversätze können durch den Schraubadapter (13) mittels oberer und seitlicher Vorsprünge (36,37) ausgeglichen werden. Die Vorsprünge (36,37) sind an die Formgebung der Längsträger (5,9) angepasst und stehen mit diesen an den Verbindungsstellen in einem formschlüssigen Eingriff.

Die Verbindung der Längsträger (5,9) von Fahrgestell (4) und Anbauchassis (8) erfolgt über den besagten Schraubadapter (13), der an beiden Verbindungsstellen zum Anbauchassis (8) und zum Fahrgestell (4) Schraubverbindungen (11) aufweist. Vorzugsweise wird auf Schweißverbindungen oder anderen thermische Verbindungstechniken verzichtet. Die Schraubverbindungen (11) können als klassische Schraubverbindungen mit planer Anlage zu verbindenden Teile ausgeführt sein. An manchen Stellen, z.B. den Verbindungsstellen zwischen dem Schraubadapter (13) und dem Anbauchassis (8) empfiehlt sich eine Napfverschraubung (12), die an den Verbindungsstellen mittels ineinander greifender Napfprägungen (19) für eine formschlüssige Führung und eine höhere Festigkeit sorgt. Die Schraubverbindungen und Napfverschraubungen (11,12) sind jeweils mehrfach vorhanden. Die Napfverschraubungen (12) können z.B. in ihrer Formgestaltung und Funktion entsprechend der DE-C 26 07 154 oder DE-C 28 04 378 ausgebildet sein. Außer kegelstumpfartigen Napfformen sind auch längliche Napfformen, z.B. in Rippenform, möglich.

Der Schraubadapter (13) besitzt vorzugsweise eine hohle Kastenform und ist ferner bevorzugt mehrteilig ausgebildet. Er weist zumindest zwei die oberen und seitlichen Vorsprünge (36,37) bildende Anschlussteile (14,15) zur Verbindung mit dem Anbauchassis (8) und dem Fahrgestell (4) auf, wobei diese Anschlussteile (14,15) untereinander ebenfalls durch Schrauben verbunden sind. Unter Schraubverbindungen (11) werden im Sinne der Erfindung nicht nur die klassischen Gewindeschraubverbindungen verstanden, sondern auch jegliche andere vorzugsweise lösbare Bolzenverbindung, die Klemm- oder Schnappverbindungen oder dgl. statt der konventionellen Gewindeverschraubung haben können.

Der Schraubadapter (13) ist außerdem derart gestaltet, dass er mindestens eine Wand, vorzugsweise eine vertikale Wand oder einen Steg, von mindestens einem Längsträger (5,9) an einer Verbindungsstelle beidseits in flächiger, stützender Anlage umgreift und einspannt. Hierbei findet eine Verschraubung und gegenseitige Abstützung dieser Adapterteile statt, wodurch die an der Verbindungsstelle eingeleiteten Kräfte weitgehend verformungsfrei aufgenommen und übertragen werden.

Die Anschlussteile gliedern sich in ein äußeres Anschlussteil (14) und ein inneres Anschlussteil (15). Das äußere Anschlussteil (14) dient zur formschlüssigen Führung und Verbindung der Längsträger (5,9) von Fahrgestell (4) und Anbauchassis (8). Das äußere Anschlussteil (14) ist mit beiden Längsträgern (5,9) durch Schrauben verbunden. Es kann in der nachfolgend näher beschriebenen Weise in sich mehrteilig sein. Das äußere Anschlussteil (14) umgreift den zugehörigen Längsträger (5) des Fahrgestells (4) an beiden Seitenwänden und bildet vorzugsweise ein U-förmiges, den Längsträger (5) unten und seitlich umgreifendes Anschlussgehäuse.

Das äußere Anschlussteil (14) wirkt mit einem inneren Anschlussteil (15) zusammen, welches als Gegenhalter zur Bildung der vorerwähnten Einspannung im Innenraum des Fahrgestell-Längsträgers (5) angeordnet wird. Durch die Schraubverbindung (11) spannen beide Anschlussteile (14,15) vorzugsweise beide Seitenwände des Längsträgers (5) mittels einer durchgehenden Schraubverbindung (11) in flächiger Anlage zwischen sich ein. Biege- und Torsionskräfte und -momente werden dadurch breitflächig in den dünnwandigen Längsträger (5) eingeleitet, ohne dass sich dieser dabei in unerwünschter Weise verformt oder anderweitig überlastet wird.

In den Zeichnungen sind zwei verschiedene Varianten von Schraubadaptern (13) und äußeren Anschlussteilen (14) dargestellt. Das innere Anschlussteil (15) ist in beiden Ausführungsformen im Wesentlichen gleich.

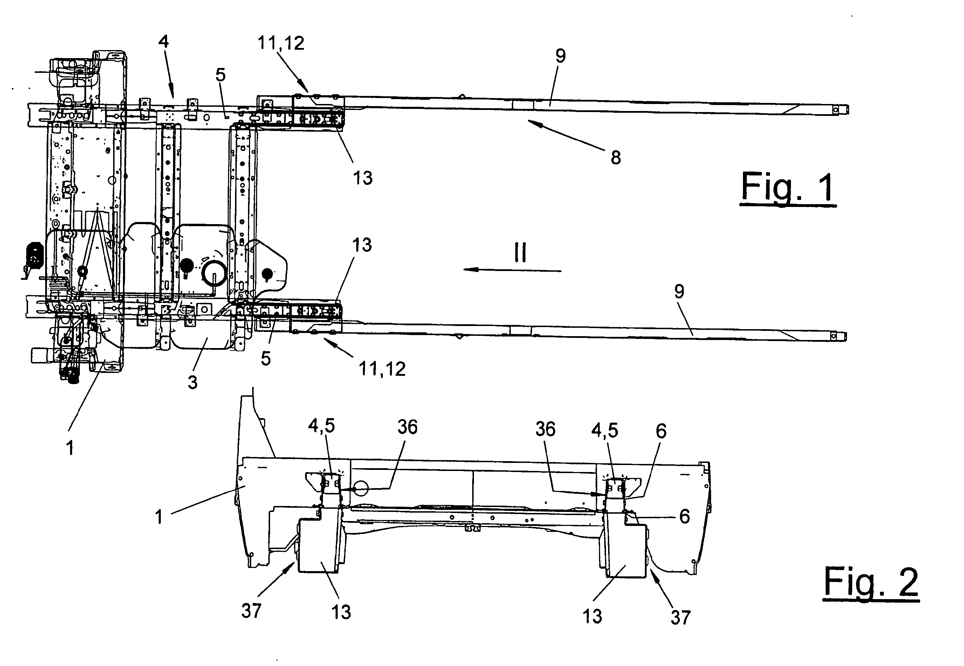

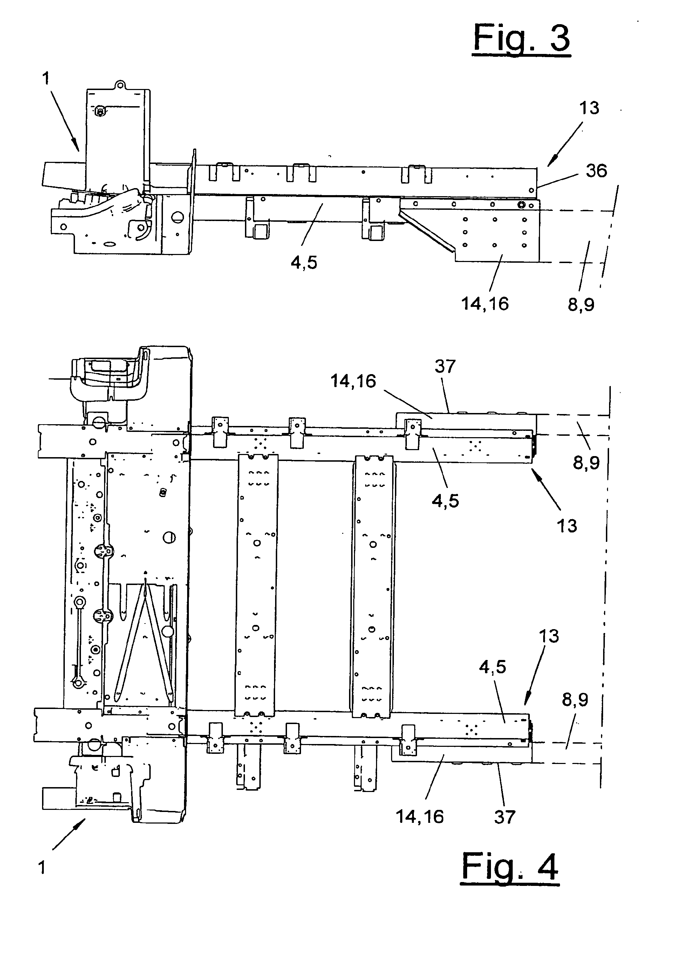

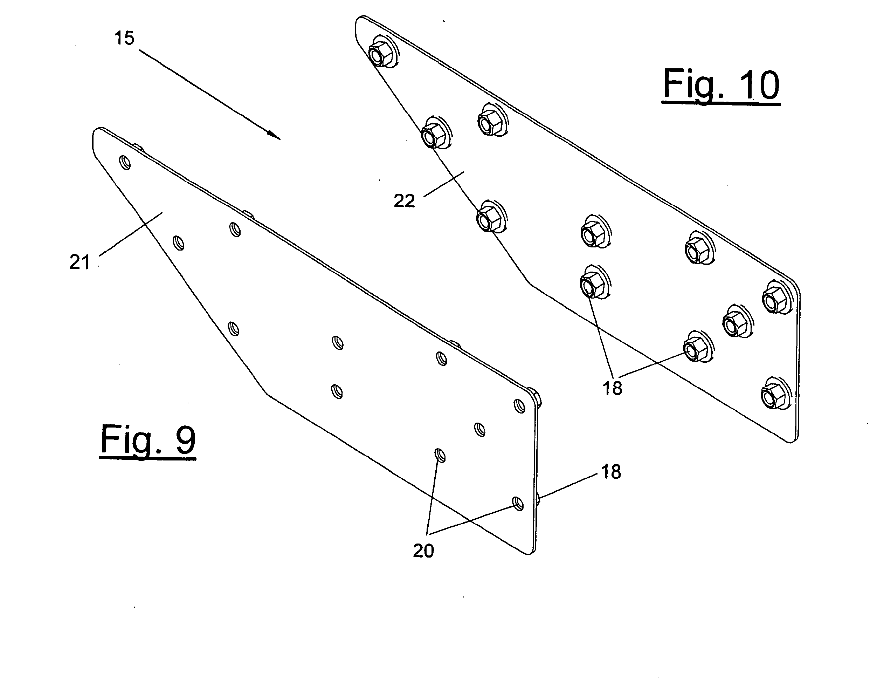

Im ersten Ausführungsbeispiel von Figur 1 bis 16 wird das innere Anschlussteil (15) von zwei an die Längsträgerform angepassten und vorzugsweise ebenen Stützblechen (21,22) gebildet, die sich vorzugsweise vollflächig und plan an die seitlichen Innenwände des Fahrgestelllängsträgers (5) anlegen können. Die in Figur 9 und 10 dargestellten linken und rechten Stützbleche (21,22) haben für die Schraubverbindungen (11) Durchgangsbohrungen, die mit Muttern (18) korrespondieren, die auf der Innenseite der Stützbleche (21,22) in geeigneter Weise, z.B. durch eine Schweißverbindung, befestigt sind. Von außen durch das äußere Anschlussteil (14) und die Längsträgerwandung durchgesteckte Schrauben können in die Muttern (18) gedreht werden und sorgen für die vorerwähnte Verspannung der Anschlussteile (14,15). Die Stützbleche (21,22) können an ihrem vorderen Ende eine nach oben ansteigende Anschrägung haben, die das Einführen in den hohlen Längsträger (5) erleichtern und die belastungsgünstig geformt sind.

In einer nicht dargestellten Variante können statt der Muttern (18) an den Stützblechen (21,22) innenseitig zwischen den Stützblechen (21,22) auf den Innenabstand angepasste Stützhülsen für durchgesteckte Schraubbolzen und für eine Durchgangsverschraubung angeordnet sein.

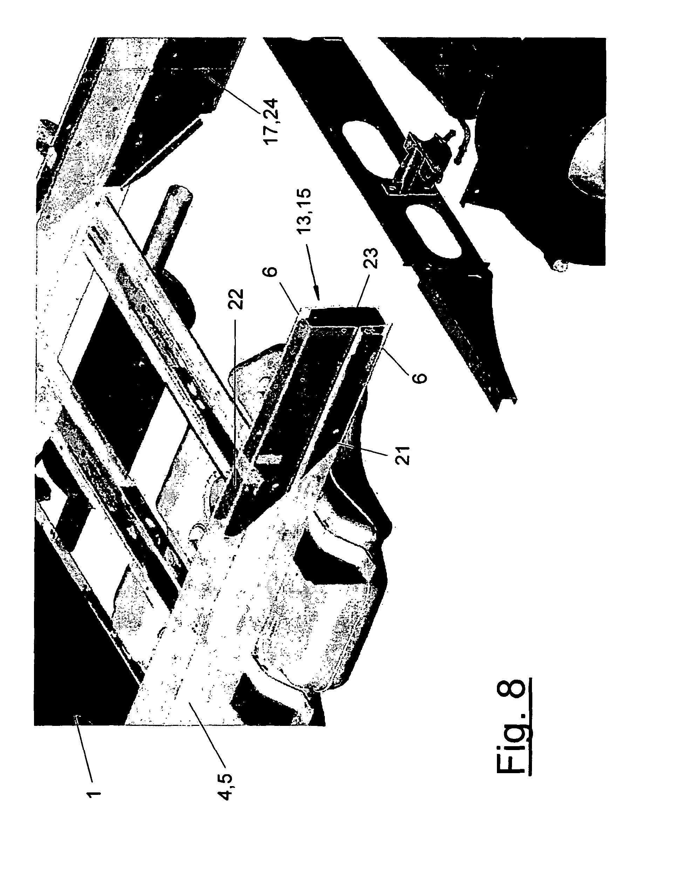

Figur 8 verdeutlicht in einer teiltransparenten Darstellung die Lage der Stützbleche (21,22) im Längsträger (5). In der stirnseitigen Längsträgeröffnung kann zusätzlich ein angepasster Stützbügel (23) angeordnet und eingeschraubt sein, der eine vertikal ausgerichtete U-Form besitzt und an dem sich die Seitenwände des Längsträgers (5) abstützen können.

Wie Figur 8 ferner verdeutlicht, kann in diesem Ausführungsbeispiel der Längsträger (5) aus zwei aufeinander gesetzten Blechprofilen (6) bestehen, die z.B. als sogenannte Hutprofile ausgebildet sind und die an der Kontaktstelle beidseits abstehende Flansche haben, an denen sie auch miteinander verbunden sind.

Das äußere Anschlussteil (14) besteht in beiden Ausführungsbeispielen aus einem Konsolenteil (16) und einem damit durch Schrauben verbindbaren Trägerteil (17), die miteinander das vorerwähnte Anschlussgehäuse bilden. Die Form und Ausgestaltung von Konsolen- und Trägerteil (16,17) ist den beiden Ausführungsbeispielen unterschiedlich.

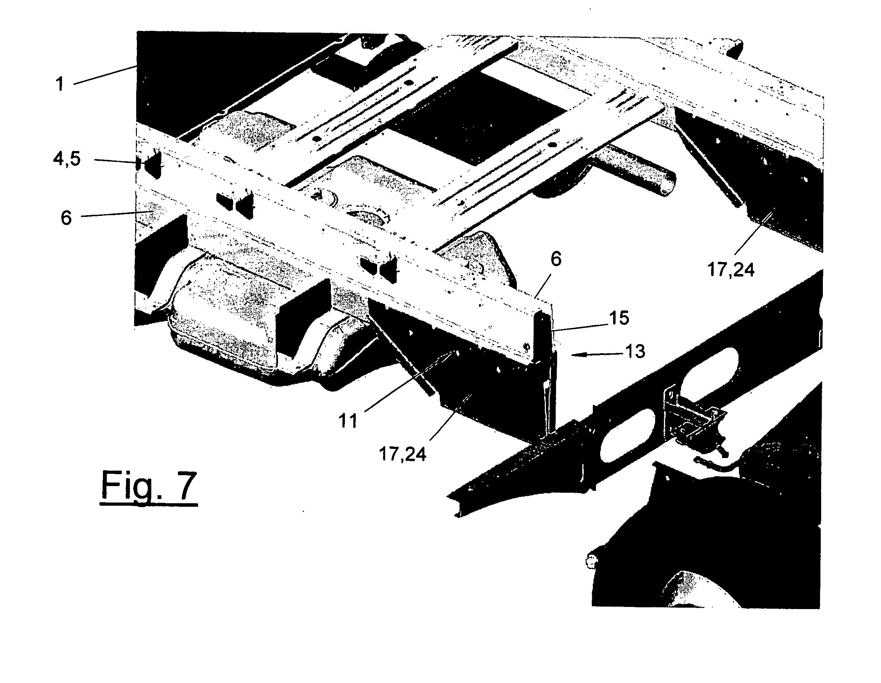

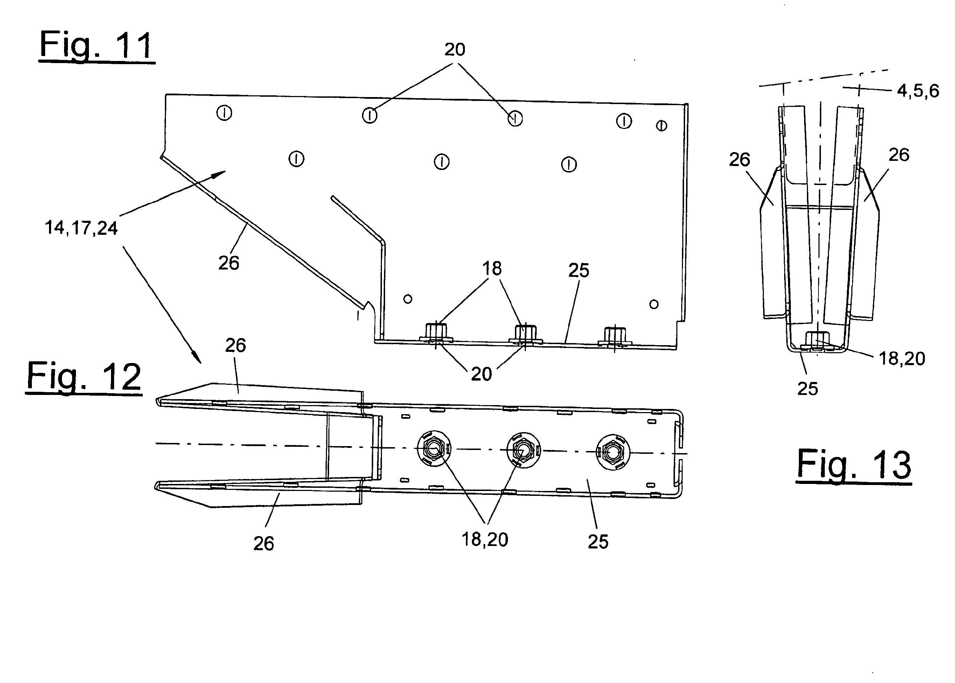

In der Variante von Figur 1 bis 16 ist das Trägerteil (17) als U- oder V-förmig gebogene Trägermanschette (24) ausgebildet, die in Figur 7 in Montagestellung und in Figur 11 bis 13 als Einzelteil dargestellt ist. Eine solche Manschettenform empfiehlt sich im Fall der vorerwähnten Hutprofile (6), wobei auch häufig die Seitenwände der Hutprofile (6) konisch verlaufen. Die Trägermanschette (24) kann von unten her auf das untere Hutprofil (6) aufgesteckt werden, wie dies in Figur 13 durch eine gestrichelte Darstellung des Hutprofils (6) verdeutlicht ist. Hierbei ergibt sich eine beidseitig flächige Anlage zwischen den Seitenwänden der Trägermanschette (24) und des Hutprofils (6).

Die Trägermanschette (24) hat an ihren Seitenwänden im oberen Bereich und in der Kontaktzone zum Hutprofil (6) bzw. Längsträger (5) mehrere Durchgangsbohrungen (20) zum Durchstecken von Schrauben. Ferner hat die Trägermanschette (24) einen horizontalen Boden (25), an dem innenseitig ebenfalls mehrere Schraubbohrungen (20) vorhanden sind, über denen fluchtend Muttern (18) angeordnet und befestigt sind. Die Seitenwände der Trägermanschette (24) haben im hinteren Bereich umgebogene Flansche zur Stabilisieren, die zwischen sich einen V-förmigen Freiraum lassen. Am vorderen Ende sind die Seitenwände schräg nach oben abgewinkelt und haben hier seitlich nach außen gestellte Stützflansche (26).

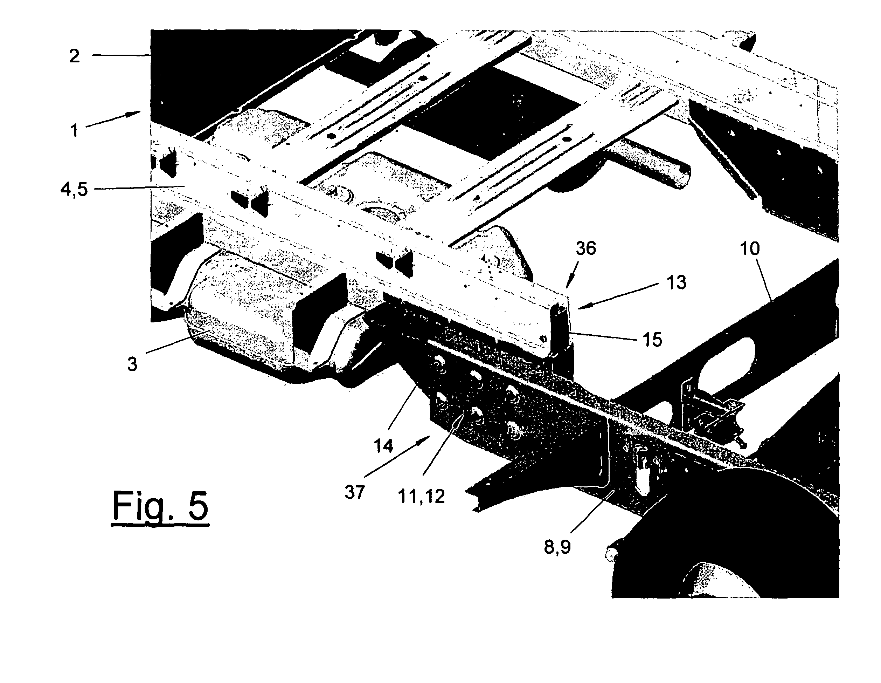

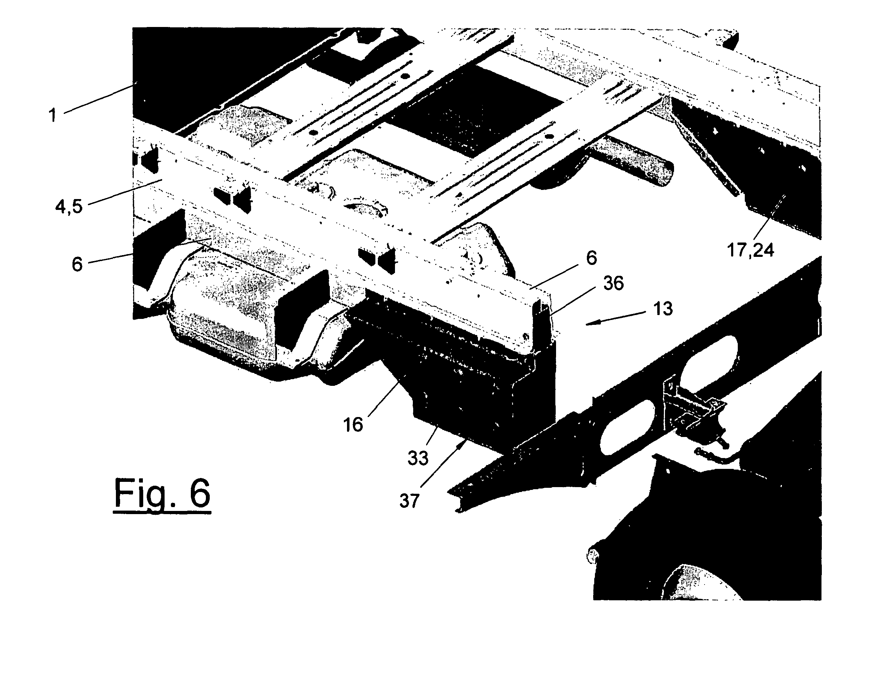

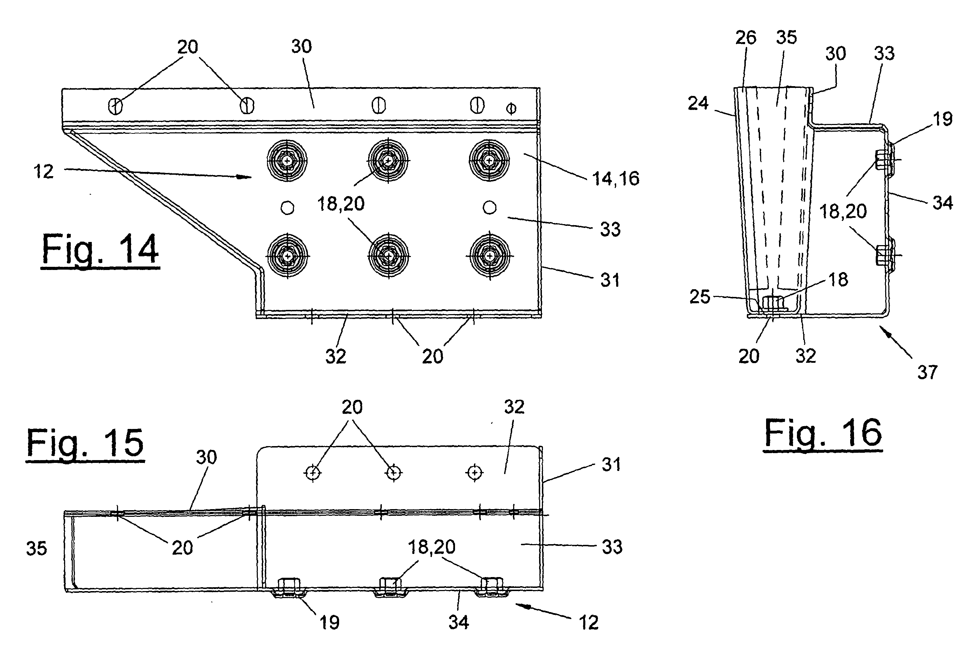

Figur 14 bis 16 zeigen das an die Trägermanschette (24) angepasste Konsolenteil (16), welches von unten her auf die Trägermanschette (24) aufgesteckt und verschraubt werden kann. Figur 5 und 6 zeigen diese Montagestellung. Das Konsolenteil (16) besitzt eine seitlich ausbauchende, den Vorsprung (37) bildende, kastenförmige Konsole (33), die an die Form der Längsträger (9) des Anbauchassis (8) angepasst ist und an der der zugehörige Längsträger (9) zumindest an der Oberseite und der Seitenwand (34) in formschlüssiger Führung angelegt werden kann. Die Verbindung erfolgt über die Seitenwand (34) durch die vorerwähnten Napfverschraubungen (12) und die Napfprägungen (19) in der Konsolenwand und der Längsträgerwand. An der Innenseite der Seitenwand (34) sind wiederum über Durchgangsbohrungen Muttern (18) befestigt. Die Verbindung erfolgt durch von außen durchgesteckte Schrauben.

Die Konsolenteile (16) sind für die linke und rechte Fahrzeugseite unterschiedlich und bauchen mit ihren Konsolen (33) jeweils nach außen aus. Die Konsolen (33) sorgen für den Seitenversatz der Chassislängsträger (9). Außerdem sind sie mit Abstand unterhalb eines längs ausgerichteten stehenden Anschlussflansches (30) angeordnet, der die Verbindungsstelle zum Längsträger (5) des Fahrgestells (4) bildet. Durch diesen Höhenunterschied sorgt die Konsole (33) auch für den Höhenversatz der Chassislängsträger (9).

Am stehenden Anschlussflansch (30) sind mehrere Schraubbohrungen (20) vorhanden, die mit den zugeordneten Schraubbohrungen (20) am oberen Rand der Trägermanschette (24) und am unteren Hutprofil (6) fluchten. Wie Figur 16 verdeutlicht, liegen in Montagestellung der Anschlussflansch (30), die Trägermanschette (24) und das Hutprofil (6) flächig aneinander und können durch von außen durchgesteckte Schrauben mit dem zugehörigen inneren Stützblech (21,22) verschraubt und verspannt werden. Sie bilden den oberen Vorsprung (36).

Das Konsolenteil (16) besitzt ferner an der Unterseite einen im Wesentlichen horizontalen und liegenden Anschlussflansch (32), der zugleich den Konsolenboden bildet und der die Stützfläche zur Auflage der Trägermanschette (24) bildet. Der liegende Anschlussflansch (32) ragt über den stehenden Anschlussflansch (30) seitlich hinaus und bildet die Stützfläche für den Boden (25) der Trägermanschette (24). Durch eine von außen eingesteckte Schraube können die Teile miteinander bodenseitig verschraubt werden.

Das Konsolenteil (16) besitzt ferner am vorderen Ende einen schräg ansteigenden Gegenflansch (35), der sich in Montagestellung flächig am äußeren Stützflansch (26) der Trägermanschette (24) abstützt und für eine formschlüssige Führung sorgt. An der Rückseite hat das Konsolenteil (16) einen stehenden und quer ausgerichteten Anschlussflansch (31), der außenseitig die Trägermanschette (24) bedeckt. Hier kann ggf. eine zusätzliche Schraubverbindung mit den Flügeln der Trägermanschette (24) und ggf. auch mit dem in der Längsträgeröffnung befindlichen Stützbügel (23) vorhanden sein. Ansonsten sind geeignete Abdeckungen und Dichtmittel zum sicheren Verschluss der Hohlräume an den Längsträgern (5,9) und am Schraubadapter (13) vorhanden.

Im Ausführungsbeispiel von Figur 1 bis 16 ist eine Quertraverse (10) am Anbauchassis (8) vorhanden, die in deren Längsträger (5) eingesteckt und dabei mit etwas Abstand zu den benachbarten Schraubadaptern (13) angeordnet ist. Die Quertraverse (10) stabilisiert zusätzlich die Verbindungsstelle und bildet außerdem eine Querauflage für Fahrzeugaufbauten.

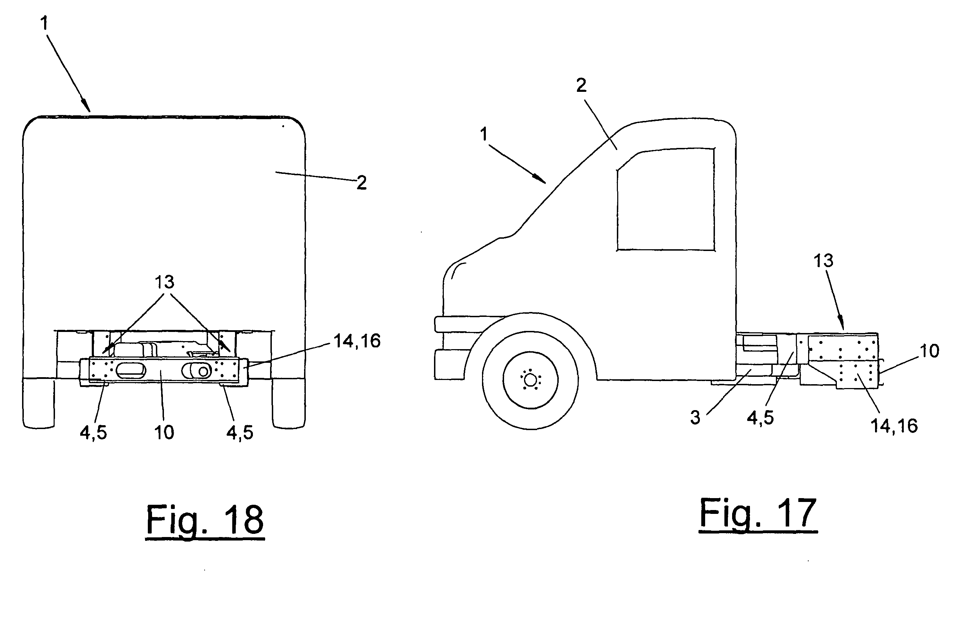

Im Ausführungsbeispiel von Figur 17 bis 24 hat der Zugkopf (1) eine andere Form von Längsträgern (5), die hier als geschlossene und im Querschnitt rechteckige Kästen ausgebildet sind. Ein außenseitiger Flansch wie bei den Hutprofilen (6) im ersten Ausführungsbeispiel fehlt hier, so dass eine bessere und flächige Seitenanlage des äußeren Anschlussteils (14) am Längsträger (5) möglich ist. Dementsprechend ist das Anschlussteil (14) anders als im ersten Ausführungsbeispiel gestaltet. Das innere Anschlussteil (15) mit den Stützblechen (21,22) kann die selbe Form wie im ersten Ausführungsbeispiel haben. Auf den Stützbügel (23) kann hierbei ggf. verzichtet werden. Der Schraubadapter (13) hat auch in dieser Bauform obere und seitliche Vorsprünge (36,37).

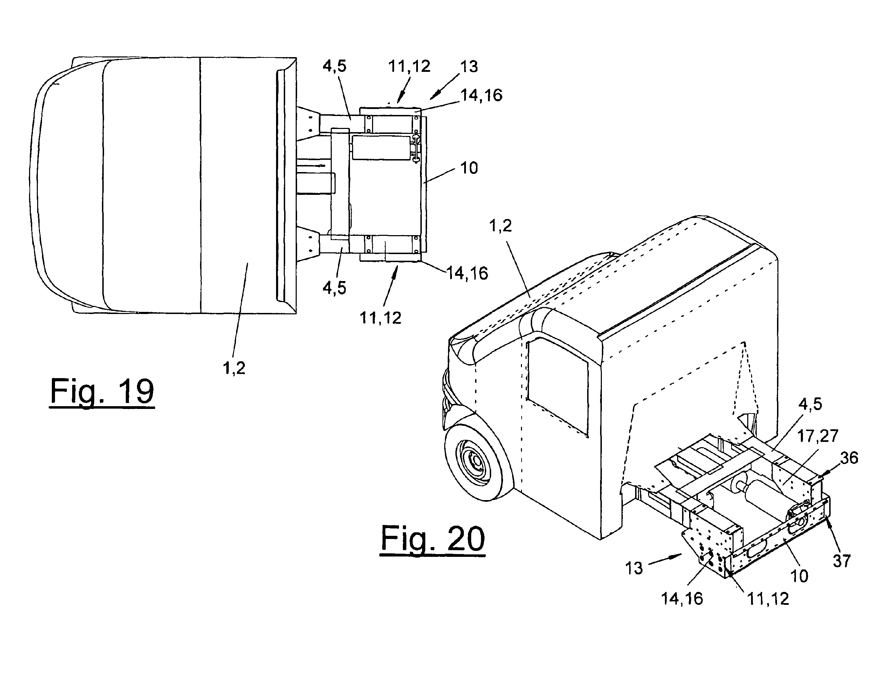

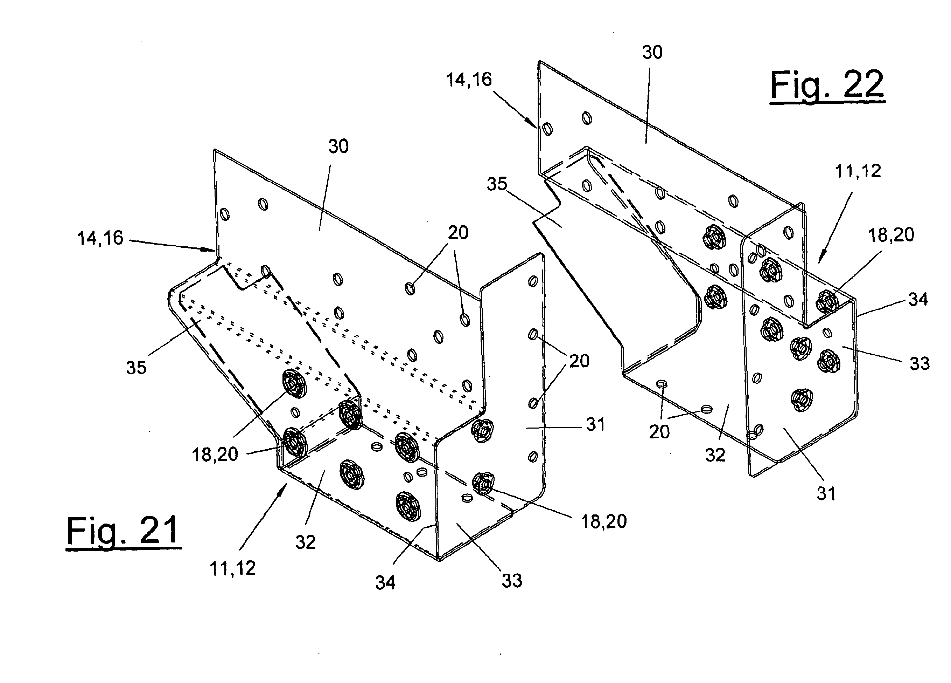

Wie aus den mehrfach geklappten Zugkopfdarstellungen von Figur 17 bis 19 und der perspektivischen Ansicht von Figur 20 ersichtlich ist, wird das in Figur 21 und 22 in linker und rechter Ausbildung dargestellte Konsolenteil (16) vorzugsweise direkt mit der Außenseite des zugehörigen Längsträgers (5) in Kontakt gebracht und über einen stehenden und längs gerichteten Anschlussflansch (30) mit Schraubbohrungen (20) verschraubt. Die Konsole (33) ist ähnlich wie im ersten Ausführungsbeispiel mit den innen liegenden Muttern (18) und dem schrägen Gegenflansch (35) ausgebildet. Der stehende Anschlussflansch (31) ist in diesem Ausführungsbeispiel breiter und trägt am freien Rand mehrere Schraubbohrungen (20). Zudem können an diesem Anschlussflansch (31) ein oder mehrere Muttern (18) innenseitig befestigt sein. Sie können zur Schraubbefestigung der in Figur 20 dargestellten Quertraverse (10) dienen, die in diesem Ausführungsbeispiel direkt mit dem Konsolenteil (16) verbunden wird.

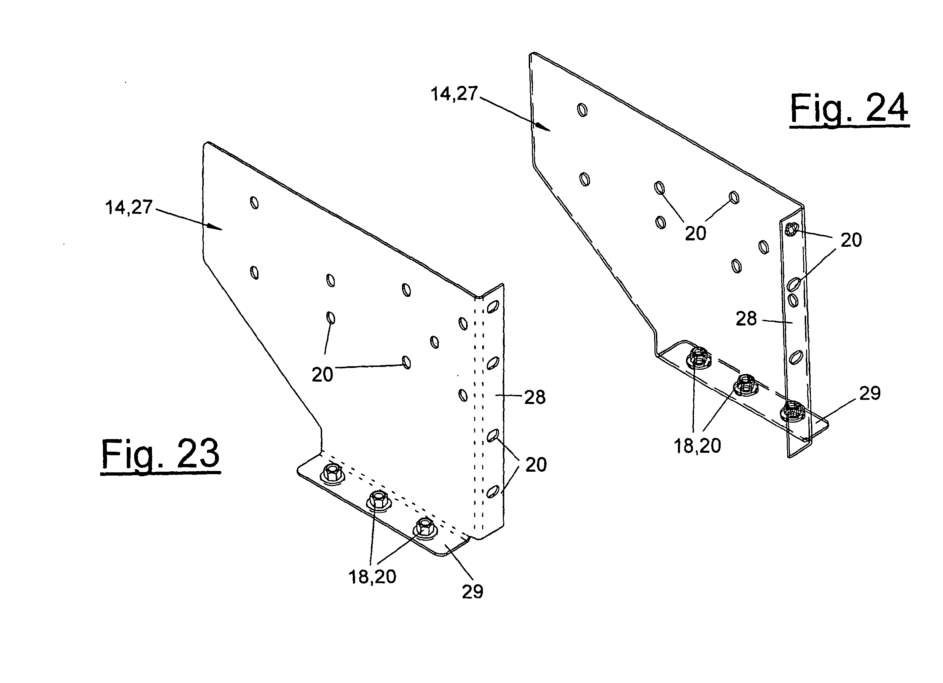

Figur 23 und 24 zeigen das zugehörige Trägerteil (17), das in diesem Ausführungsbeispiel als mehrfach abgekantetes Trägerblech (27) mit linker und rechter Ausformung ausgebildet ist. Das Trägerblech (27) wird vorzugsweise mit der innen liegenden Außenwand des Längsträgers (5) verbunden. Das Trägerblech (27) weist jeweils einen stehenden Trägerflansch (28) und einen liegenden oder horizontalen Trägerflansch (29) auf, wobei der stehende Trägerflansch (28) eine Reihe von Schraubbohrungen (20) und der liegende Trägerflansch (29) Schraubbohrungen mit darüber innenseitig befestigten Muttern (18) hat. Der liegende Trägerflansch (29) ist hierbei zum Konsolenteil (16) gerichtet, reicht unter dem Längsträger (5) hindurch und liegt auf dem Konsolenboden bzw. Anschlussflansch (32) des Konsolenteils (16) für eine Schraubverbindung (11) mit seinen Muttern (18) auf. Der stehende Trägerflansch (28) ist jeweils zur Fahrzeugmitte gerichtet, wobei seine Flanschoberfläche in Montagestellung bündig mit dem Heckende des Längsträgers (5) abschließt. Die beiden stehenden Flansche (28,31) überlappen dadurch einander mit ihren Anschlussbohrungen (20) und ermöglichen eine Schraubverbindung (11) seitlich neben dem Längsträger (5). Der stehende Flansch (31) des Konsolenteils (16) überdeckt und verschließt dabei die rückwärtige Längsträgeröffnung.

Alternativ kann im Längsträger (5) wie im ersten Ausführungsbeispiel ein Stützbügel (23) vorhanden sein. Andererseits kann in Anlehnung an dieses erste Ausführungsbeispiels auch ein ähnliches Trägerblech mit entsprechend geänderten Flanschausrichtungen zwischen Konsolenteil (16) und Längsträger (5) eingespannt und verschraubt werden.

Abwandlungen der gezeigten und beschriebenen Ausführungsformen sind in verschiedener Weise möglich. Zum einen können die Einzelmerkmale der verschiedenen Ausführungsformen beliebig untereinander vertauscht und kombiniert werden. Zudem kann die Formgebung der Schraubadapter (13) und ihrer Komponenten in Anpassung an die jeweilige Einbausituation und die Formvorgabe von Fahrgestell (4) und Anbauchassis (8) entsprechend variieren. Bei kleineren Chassisspurweiten kann die Konsole (33) keinen Seitenversatz haben und sich längs der fluchtenden Längsträger (5,9) erstrecken. Die Konsole (33) muss auch keinen Höhenversatz aufweisen. Insoweit kann auf ein oder beide Vorsprünge (36,37) verzichtet werden. Ansonsten können in Variation der gezeigten Ausführungsbeispiele die Vorsprünge (36,37) durch andere konstruktive Adaptergestaltungen geschaffen werden. Ferner kann eine Einspannung der Längsträgerwandung alternativ oder zusätzlich bei den Längsträgern (9) des Anbauchassis (8) in entsprechend angepasster weise und Gestaltung der Konsole (33) erfolgen.

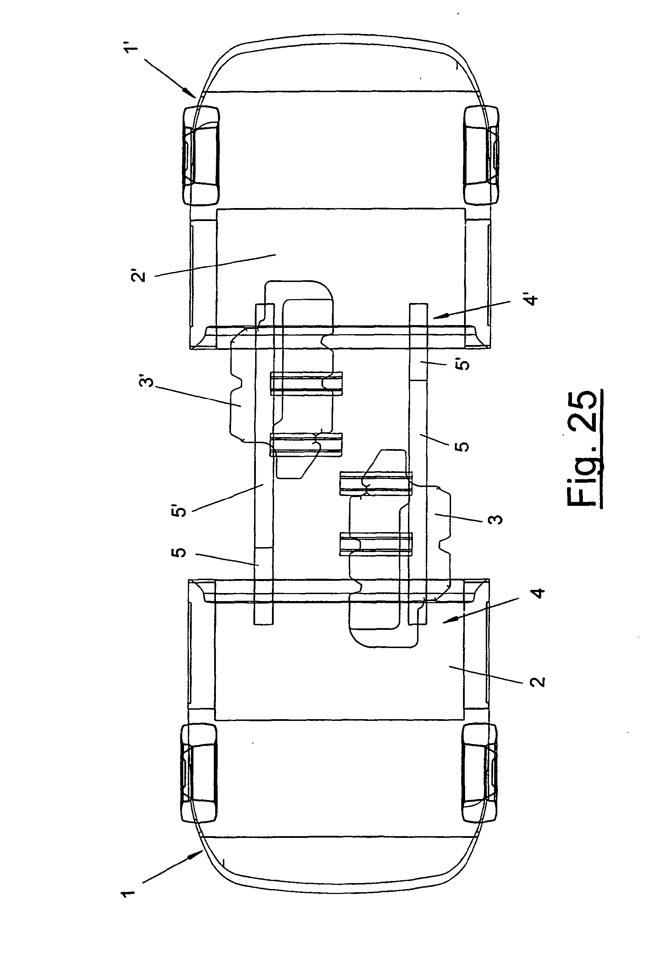

Figur 25 zeigt eine Transporteinheit aus zwei Zugköpfen (1), die mit ihren Rückseiten gegeneinander gestellt und über ihre Längsträger (5,5') miteinander verbunden sind. Solche Transporteinheiten können selbstfahrend sein. Um die Länge der Transporteinheit zu verkürzen, können die Längsträger (5,5') asymmetrisch abgelenkt sein, wobei sie sich durch die gegeneinander gestellten Zugköpfe (1,1') spiegelbildlich ergänzen. Hierbei ist jeweils der am Tank (3) zugeordnete Längsträger (5) länger und mit etwas Abstand hinter dem Tank (3) abgeschnitten. Der andere Längsträger (5,5') ist kürzer und hat eine Stummelform. Durch diese Bauform können sich die gegeneinander gestellten Zugblöcke (1,1') im Bereich der mit Seitenversatz angeordneten Tanks (3) überlappen, was die gewünschte Verkürzung bringt. Die Montage eines Anbauchassis kann an Zugköpfe (1) mit asymmetrischem Fahrgestell (4) in beliebig geeigneter Weise erfolgen. Das vorbeschriebene Ausführungsbeispiel mit dem Schraubadapter (13) ist hierfür eine bevorzugte Ausführungsform, die allerdings auch unter Einsatz konventioneller Verbindungstechnik abgewandelt sein kann.

Die Längsträger (9) des Anbauchassis (8) können in Anpassung an das asymmetrische Fahrgestell (4) in komplementärer Weise asymmetrisch abgelängt sein. Wenn Anschlussstellen auf gleicher Höhe verlangt werden, können z.B. am Fahrgestell (4) die kurzen Längsträger (5) mit angebauten Zwischenträgern auf das gewünschte Maß verlängert werden.

### BEZUGSZEICHENLISTE

- 1: Zugkopf
- 2: Kabine
- 3: Tank
- 4: Fahrgestell
- 5: Längsträger
- 6: Blechprofil, Hutprofil
- 7: Flansch
- 8: Anbauchassis
- 9: Längsträger
- 10: Quertraverse
- 11: Schraubverbindung
- 12: Napfverschraubung
- 13: Schraubadapter
- 14: Anschlussteil außen
- 15: Anschlussteil innen
- 16: Konsolenteil
- 17: Trägerteil
- 18: Mutter
- 19: Napfprägung
- 20: Schraubbohrung
- 21: Stützblech, Gegenhalter
- 22: Stützblech, Gegenhalter
- 23: Stützbügel
- 24: Trägermanschette
- 25: Boden
- 26: Stützflansch
- 27: Trägerblech
- 28: Trägerflansch stehend
- 29: Trägerflansch liegend
- 30: Anschlussflansch stehend längs
- 31: Anschlussflansch stehend quer
- 32: Anschlussflansch liegend
- 33: Konsole
- 34: Seitenwand Konsole
- 35: Gegenflansch
- 36: Vorsprung oben
- 37: Vorsprung seitlich

## Patentansprüche

1. Anbauchassis für motorisierte Zugköpfe (1) mit mindestens einem Adapter zur Verbindung des mit einer Hinterachsanordnung und mit Längsträgern (9) versehenen Anbauchassis (8) mit dem Fahrgestell (4) des Zugkopfs (1),
wobei der Adapter als Schraubadapter (13) ausgebildet ist und an beiden Verbindungsstellen zum Anbauchassis (8) und zum Fahrgestell (4) Schraubverbindungen (11) aufweist, **dadurch gekennzeichnet, dass** der Schraubadapter (13) mindestens eine Wand von mindestens einem Längsträger (5,9) an einer Verbindungsstelle in flächiger, stützender Anlage beidseits umgreift und einspannt.

2. Anbauchassis nach Anspruch 1, **dadurch gekennzeichnet, dass** die Längsträger (9) des Anbauchassis (8) zum Fahrgestell (4) des Zugkopfs (1) einen Versatz aufweisen, den der Schraubadapter (13) ausgleicht.

3. Anbauchassis nach Anspruch 1 oder 2, **dadurch gekennzeichnet, dass** der Schraubadapter (13) obere und seitliche vorsprünge (36,37) für einen zweiachsigen Versatz der Verbindungsstellen von Anbauchassis (8) und Fahrgestell (4) aufweist.

4. Anbauchassis nach Anspruch 3, **dadurch gekennzeichnet, dass** die Vorsprünge (36,37) formschlüssig an Längsträger (5,9) des Anbauchassis (9) und des Fahrgestells (4) angepasst sind.

5. Anbauchassis nach einem der vorhergehenden Ansprüche, **dadurch gekennzeichnet, dass** der Schraubadapter (13) zumindest bereichsweise eine hohle Pastenform aufweist.

6. Anbauchassis nach einem der vorhergehenden Ansprüche, **dadurch gekennzeichnet, dass** der Schraubadapter (13) mehrteilig ausgebildet ist und zumindest zwei Anschlußteile (14,15) zur Verbindung mit dem Anbauchassis (8) und dem Fahrgestell (4) aufweist, wobei die Anschlussteile (14,15) untereinander ebenfalls durch Schrauben verbindbar sind.

7. Anbauchassis nach einem der vorhergehenden Ansprüche, **dadurch gekennzeichnet, dass** der Schraubadapter (13) ein äußeres Anschlussteil (14) zur formschlüssigen Führung und Verbindung der Längsträger (5,9) von Fahrgestell (4) und Anbauchassis (8) aufweist.

8. Anbauchassis nach einem der vorhergehenden Ansprüche, **dadurch gekennzeichnet, dass** der Schraubadapter (13) ein inneres Anschlussteil (15) als Gegenhalter zur Montage im Innenraum des Fahrgestelllängsträgers (5) aufweist.

9. Anbauchassis nach einem der vorhergehenden Ansprüche, **dadurch gekennzeichnet, dass** das innere Anschlussteil (15) zwei oder mehr Stützbleche (21,22) mit daran befestigten Muttern (18) aufweist.

10. Anbauchassis nach einem der vorhergehenden Ansprüche, **dadurch gekennzeichnet, dass** das innere Anschlussteil (15) einen zusätzlichen, zwischen die Seitenwände des Längsträgers (9) einbringbaren Stützbügel (23) aufweist.

11. Anbauchassis nach einem der vorhergehenden Ansprüche, **dadurch gekennzeichnet, dass** das äußere Anschlussteil (14) ein Konsolenteil (16) zur Verbindung von Fahrgestell (4) und Anbauchassis (8) aufweist.

12. Anbauchassis nach einem der vorhergehenden Ansprüche, **dadurch gekennzeichnet, dass** das Konsolenteil (16) eine abgewinkelte Form zur versetzten Verbindung von Fahrgestell (4) und Anbauchassis (8) aufweist.

13. Anbauchassis nach einem der vorhergehenden Ansprüche, **dadurch gekennzeichnet, dass** das Konsolenteil (16) eine seitlich ausbauchende Konsole (33) mit innenseitig angebrachten Muttern (18) zur Verbindung mit dem Längsträger (9) des Anbauchassis (8) aufweist.

14. Anbauchassis nach einem der vorhergehenden Ansprüche, **dadurch gekennzeichnet, dass** das Konsolenteil (16) eine Napfverschraubung (12) zur Verbindung mit dem Längsträger (9) des Anbauchassis (8) aufweist.

15. Anbauchassis nach einem der vorhergehenden Ansprüche, **dadurch gekennzeichnet, dass** das äußere Anschlussteil (14) ein mit dem Konsolenteil (16) verbindbares Trägerteil (17) zum beidseitigen Anschluss am Längsträger (5) des Fahrgestells (4) aufweist.

16. Anbauchassis nach einem der vorhergehenden Ansprüche, **dadurch gekennzeichnet, dass** das Trägerteil (17) als U- oder V-förmige Trägermanschette (24) zur beidseitigen Umgriff des Längsträgers (5) ausgebildet ist.

17. Anbauchassis nach einem der vorhergehenden Ansprüche, **dadurch gekennzeichnet, dass** das Trägerteil (17) als abgewinkeltes Trägerblech (27) mit einem liegenden und einem stehenden Trägerflansch (32) zur Schraubverbindung mit dem Konsolenteil (16) und zur Bildung eines Anschlussgehäuses ausgebildet ist.

18. Anbauchassis nach einem der vorhergehenden Ansprüche, **dadurch gekennzeichnet, dass** das Konsolenteil (16) längs und quer stehende sowie liegende Anschlussflansche (29,30,31) zur Schraubverbindung mit dem Fahrgestelllängsträger (5) und dem Trägerteil (17) aufweist.

19. Anbauchassis nach einem der vorhergehenden Ansprüche, **dadurch gekennzeichnet, dass** das Anbauchassis (8) in der Nachbarschaft zum Schraubadapter (13) ein oder mehrere Quertraversen (10) aufweist.

20. Adapter zur Verbindung eines mit einer Hinterachsanordnung und mit Längsträgern (9) versehenen Anbauchassis (8) mit einem Fahrgestell (4) eines motorisierten Zugkopfs (1),
wobei der Adapter als Schraubadapter (13) ausgebildet ist und an beiden Verbindungsstellen zum Anbauchassis (8) und zum Fahrgestell (4) Schraubverbindungen (11) aufweist, **dadurch gekennzeichnet, dass** der Schraubadapter (13) eine Ausbildung aufweist, um mindestens eine Wand von mindestens einem Längsträger (5,9) an einer Verbindungsstelle in flächiger, stützender Anlage beidseits zu umgreifen und einzuspannen.

## Claims

1. Attachable chassis for motorized tractor heads (1), having at least one adapter for connecting the attachable chassis (8), which is provided with a rear axle arrangement and with longitudinal beams (9), to the undercarriage (4) of the tractor head (1), with the adapter being designed as a screw-type adapter (13) and having screw connections (11) at both connecting points to the attachable chassis (8) and to the undercarriage (4), **characterized in that** the screw-type adapter (13) engages around and clamps at least one wall of at least one longitudinal beam (5, 9) in areal supporting contact at both sides at a connecting point.

2. Attachable chassis according to Claim 1, **characterized in that** the longitudinal beams (9) of the attachable chassis (8) have an offset relative to the undercarriage (4) of the tractor head (1), which offset is compensated by the screw-type adapter (13).

3. Attachable chassis according to Claim 1 or 2, **characterized in that** the screw-type adapter (13) has upper and lateral projections (36, 37) for a two-axis offset of the connecting points of the attachable chassis (8) and undercarriage (4).

4. Attachable chassis according to Claim 3, **characterized in that** the projections (36, 37) are matched in a positively locking fashion to longitudinal beams (5, 9) of the attachable chassis (8) and of the undercarriage (4).

5. Attachable chassis according to one of the preceding claims, **characterized in that** the screw-type adapter (13) has a hollow box shape at least in regions.

6. Attachable chassis according to one of the preceding claims, **characterized in that** the screw-type adapter (13) is formed in a plurality of parts and has at least two connecting parts (14, 15) for connecting to the attachable chassis (8) and to the undercarriage (4), with it being possible for the connecting parts (14, 15) to be connected to one another likewise by means of screws.

7. Attachable chassis according to one of the preceding claims, **characterized in that** the screw-type adapter (13) has an outer connecting part (14) for positively locking guidance and connection of the longitudinal beams (5, 9) of the undercarriage (4) and attachable chassis (8).

8. Attachable chassis according to one of the preceding claims, **characterized in that** the screw-type adapter (13) has an inner connecting part (15) as a counter bracket for mounting in the interior space of the undercarriage longitudinal beam (5).

9. Attachable chassis according to one of the preceding claims, **characterized in that** the inner connecting part (15) has two or more supporting plates (21, 22) with nuts (18) fastened thereto.

10. Attachable chassis according to one of the preceding claims, **characterized in that** the inner connecting part (15) has an additional supporting bracket (23) which can be inserted between the side walls of the longitudinal beam (9).

11. Attachable chassis according to one of the preceding claims, **characterized in that** the outer connecting part (14) has a console part (16) for connecting the undercarriage (4) and attachable chassis (8).

12. Attachable chassis according to one of the preceding claims, **characterized in that** the console part (16) has an angled shape for the offset connection of the undercarriage (4) and attachable chassis (8).

13. Attachable chassis according to one of the preceding claims, **characterized in that** the console part (16) has a laterally bulged console (33) with nuts (18) attached to the inside for connection to the longitudinal beam (9) of the attachable chassis (8).

14. Attachable chassis according to one of the preceding claims, **characterized in that** the console part (16) has a cupped screw connection (12) for connection to the longitudinal beam (9) of the attachable chassis (8).

15. Attachable chassis according to one of the preceding claims, **characterized in that** the outer connecting part (14) has a support part (17), which can be connected to the console part (16), for connection at both sides to the longitudinal beam (5) of the undercarriage (4).

16. Attachable chassis according to one of the preceding claims, **characterized in that** the support part (17) is designed as a U-shaped or V-shaped support sleeve (24) for engaging around the longitudinal beam (5) at both sides.

17. Attachable chassis according to one of the preceding claims, **characterized in that** the support part (17) is designed as an angled support plate (27) with one horizontal and one vertical support flange (32) for screw connection to the console part (16) and for forming a connecting housing.

18. Attachable chassis according to one of the preceding claims, **characterized in that** the console part (16) has longitudinal and transverse vertical and horizontal connecting flanges (29, 30, 31) for screw connection to the undercarriage longitudinal beam (5) and to the support part (17).

19. Attachable chassis according to one of the preceding claims, **characterized in that** the attachable chassis (8) has one or more transverse members (10) in the vicinity of the screw-type adapter (13).

20. Adapter for connecting an attachable chassis (8), which is provided with a rear axle arrangement and with longitudinal beams (9), to an undercarriage (4) of a motorized tractor head (1), with the adapter being designed as a screw-type adapter (13) and having screw connections (11) at both connecting points to the attachable chassis (8) and to the undercarriage (4), **characterized in that** the screw-type adapter (13) is designed so as to engage around and clamp at least one wall of at least one longitudinal beam (5, 9) in areal supporting contact at both sides at a connecting point.

## Revendications

1. Châssis rapporté pour têtes de traction motorisées (1) avec au moins un adaptateur pour la liaison du châssis rapporté (8) pourvu d'un agencement d'essieu arrière et de longerons (9) au train roulant (4) de la tête de traction (1), l'adaptateur se présentant sous la forme d'un adaptateur à visser (13) et présentant aux deux points de liaison au châssis rapporté (8) et au train roulant (4) des liaisons vissées (11), **caractérisé en ce que** l'adaptateur à visser (13) entoure et serre, en appui porteur à plat de part et d'autre, au moins une paroi d'au moins un longeron (5, 9) en un point de liaison.

2. Châssis rapporté selon la revendication 1, **caractérisé en ce que** les longerons (9) du châssis rapporté (8) présentent, par rapport au train roulant (4) de la tête de traction (1), un décalage que l'adaptateur à visser (13) compense.

3. Châssis rapporté selon la revendication 1 ou 2, **caractérisé en ce que** l'adaptateur à visser (13) présente des saillies supérieures et latérales (36, 37) pour un décalage biaxial des points de liaison du châssis rapporté (8) et du train roulant (4).

4. Châssis rapporté selon la revendication 3, **caractérisé en ce que** les saillies (36, 37) sont adaptées en complémentarité de forme aux longerons (5, 9) du châssis rapporté (8) et du train roulant (4).

5. Châssis rapporté selon l'une quelconque des revendications précédentes, **caractérisé en ce que** l'adaptateur à visser (13) présente au moins localement une forme en caisson creuse.

6. Châssis rapporté selon l'une quelconque des revendications précédentes, **caractérisé en ce que** l'adaptateur à visser (13) est réalisé en plusieurs parties, et comprend au moins deux pièces de raccordement (14, 15) pour la liaison au châssis rapporté (8) et au train roulant (4), les pièces de raccordement (14, 15) pouvant être assemblées entre elles également par des vis.

7. Châssis rapporté selon l'une quelconque des revendications précédentes, **caractérisé en ce que** l'adaptateur à visser (13) comprend une pièce de raccordement extérieure (14) pour le guidage et la liaison par complémentarité de forme des longerons (5, 9) du train roulant (4) et du châssis rapporté (8).

8. Châssis rapporté selon l'une quelconque des revendications précédentes, **caractérisé en ce que** l'adaptateur à visser (13) comprend une pièce de raccordement intérieure (15) comme appui opposé pour le montage dans l'espace intérieur du longeron de train roulant (5).

9. Châssis rapporté selon l'une quelconque des revendications précédentes, **caractérisé en ce que** la pièce de raccordement intérieure (15) présente deux tôles d'appui, ou plus, (21, 22), avec des écrous (18) fixés à celles-ci.

10. Châssis rapporté selon l'une quelconque des revendications précédentes, **caractérisé en ce que** la pièce de raccordement intérieure (15) présente un étrier de support supplémentaire (23), pouvant être inséré entre les parois latérales du longeron (9).

11. Châssis rapporté selon l'une quelconque des revendications précédentes, **caractérisé en ce que** la pièce de raccordement extérieure (14) comprend une pièce de console (16) pour la liaison du train roulant (4) et du châssis rapporté (8).

12. Châssis rapporté selon l'une quelconque des revendications précédentes, **caractérisé en ce que** la pièce de console (16) présente une forme coudée pour la liaison décalée du train roulant (4) et du châssis rapporté (8).

13. Châssis rapporté selon l'une quelconque des revendications précédentes, **caractérisé en ce que** la pièce de console (16) présente une console renflée latéralement (33) avec des écrous (18) placés à l'intérieur pour la liaison au longeron (9) du châssis rapporté (8).

14. Châssis rapporté selon l'une quelconque des revendications précédentes, **caractérisé en ce que** la pièce de console (16) présente un assemblage vissé à emboîtement (12) pour la liaison au longeron (9) du châssis rapporté (8).

15. Châssis rapporté selon l'une quelconque des revendications précédentes, **caractérisé en ce que** la pièce de raccordement extérieure (14) comprend une pièce de support (17) pouvant être assemblée à la pièce de console (16) pour le raccordement sur les deux côtés au longeron (5) du train roulant (4).

16. Châssis rapporté selon l'une quelconque des revendications précédentes, **caractérisé en ce que** la pièce de support (17) se présente sous la forme d'une manchette de support en forme de U ou de V (24) pour entourer le longeron (5) sur les deux côtés.

17. Châssis rapporté selon l'une quelconque des revendications précédentes, **caractérisé en ce que** la pièce de support (17) se présente sous la forme d'une tôle de support coudée (27) avec une aile de support couchée et une aile de support dressée (32) pour l'assemblage vissé à la pièce de console (16) et pour la formation d'un boîtier de raccordement.

18. Châssis rapporté selon l'une quelconque des revendications précédentes, **caractérisé en ce que** la pièce de console (16) comprend des ailes de raccordement (29, 30, 31) couchées ainsi que dressées longitudinalement et transversalement pour l'assemblage vissé au longeron de train roulant (5) et à la pièce de support (17).

19. Châssis rapporté selon l'une quelconque des revendications précédentes, **caractérisé en ce que** le châssis rapporté (8) comprend une ou plusieurs traverses (10) à proximité de l'adaptateur à visser (13).

20. Adaptateur pour la liaison d'un châssis rapporté (8) pourvu d'un agencement d'essieu arrière et de longerons (9) à un train roulant (4) d'une tête de traction motorisée (1), l'adaptateur se présentant sous la forme d'un adaptateur à visser (13) et présentant aux deux points de liaison au châssis rapporté (8) et au train roulant (4) des liaisons vissées (11), **caractérisé en ce que** l'adaptateur à visser (13) présente une forme destinée à entourer et serrer, en appui porteur à plat de part et d'autre, au moins une paroi d'au moins un longeron (5, 9) en un point de liaison.
